# EUROPEAN PATENT APPLICATION

(11) **EP 4 697 123 A1**
(43) Date of publication of application: **18.02.2026**
(21) Application number: 25188476.3
(22) Date of filing: 09.07.2025
(51) Int. Cl.: G05D 1/648, A01B 69/00, G01C 21/00, G05D 105/15, G05D 109/10, G05D 107/20

(54) **ROUTE PLANNING FOR AN AGRICULTURAL VEHICLE**

(30) Priority: 13.08.2024 US 202463682622 P
(71) Applicant: AGCO International GmbH, 8212 Neuhausen am Rheinfall (CH)
(72) Inventor: ZHOU, Kun, 8930 Randers (DK); NILSSON, Rene, DK8900 Randers (DK); LAUSDAHL, Kenneth, DK8900 Randers (DK)
(74) Representative: AGCO Intellectual Property Department

(57) **Abstract**

A guidance control system for generating a recommended route for an agricultural vehicle in advance of performing an agricultural process. The guidance control system further tracks adherence of the agricultural vehicle to the recommended route and/or controlling the vehicle to follow the recommended route. The recommended route is generated responsive to dividing up the predetermined region based on analysis of exterior angles between consecutive boundary segments.

## Description

### CROSS-REFERENCE TO RELATED APPLICATIONS

N/A

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account. In particular, concave fields are often difficult to generate an efficient route for.

### BRIEF SUMMARY

According to examples in accordance with this disclosure, there is provided a computer-implemented method for generating a recommended route for an agricultural vehicle to perform an agricultural process within a predetermined region bound by a boundary.

The computer-implemented method comprises: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

*The present disclosure thereby provides a mechanism for determining a recommended route for an agricultural vehicle in advance of performing an agricultural procedure or process (e.g., a spraying procedure, ploughing procedure, planting procedure and so on). The recommended route is generated based on dividing a predetermined region into at least two sub-regions based on considering the exterior angles between pairs of consecutive linear boundary segments. In this way, complex shaped fields can essentially be divided into multiple smaller fields which can then be treated separately during route planning to more easily generate way lines which cover the entire predetermined region.*

*The present disclosure also proposes to track the adherence of the agricultural vehicle to the recommended route when performing the agricultural process. The route is updated responsive to a deviation of the agricultural vehicle from the recommended route, to thereby provide an adaptive approach that directly responds to a physical operation or position of the agricultural vehicle.*

In some examples, dividing the predetermined region may comprise: for each major pair, generating two candidate splitting lines, wherein each candidate splitting line is a continuation of each of the boundary segments of the major pair respectively across the predetermined region; and dividing the predetermined region into at least two sub-regions based on at least one of the candidate splitting lines per major pair. *This may provide a particularly effective methodology for generating splitting lines which can then be used to divide the predetermined region into sub-regions which are easier to generate recommended routes for.*

In some examples, dividing the predetermined region into at least two sub-regions based on at least one of the candidate splitting lines per major pair may comprise: using at least one of the candidate splitting lines per major pair as at least a portion of the boundary of at least one of the sub-regions. *This may facilitate a particularly efficient way to determine sub-regions using the splitting lines.*

In some examples, the method may further comprise receiving, by the guidance control system, a user input indicting which candidate splitting lines to use for dividing the predetermined region; and wherein dividing the predetermined region is further based on the received user input. *This may allow a user to have some input as to how the predetermined region is divided into sub-regions.*

In some examples, the candidate splitting lines may be user-adjustable. *In this way, a user may be able to actually adjust the candidate splitting lines and thus influence how the predetermined region will be divided.*

In some examples, the method may further comprise: generating, by the guidance control system, waylines for each of the at least two sub-regions; and wherein generating the recommended route is further based on the generated waylines. *Waylines are very important aspects of a route for an agricultural vehicle performing an agricultural process, and thus specifically generating waylines may be particularly useful for generating a recommended route.*

In some examples, the method may further comprise: merging, by the guidance control system, adjacent sub-regions if their corresponding waylines have directions within a predetermined angle of one another. *This may thus simplify the process of generating the recommended route.*

In some examples, the method may further comprise controlling an output user interface to provide a visual representation of the recommended route. *This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.*

In some examples, the position monitoring device may be configured to define a position of the agricultural vehicle within a predefined co-ordinate system; and the recommended route defines a recommended path for the agricultural vehicle within the predefined co-ordinate system. *This provides a reliable system for defining and monitoring adherence to the recommended route.*

In some examples, the recommended route may comprise one or more location markers each identifying a point of the recommended route with respect to the predetermined co-ordinate system. *This provides a reliable and resource-efficient mechanism for storing data that identifies the recommended route.*

In some examples, the act of obtaining the boundary information may comprise retrieving the boundary information from a database storing a plurality of instances of boundary information for different predetermined regions. *Thus, it is not necessary that the guidance control system perform the generation of the boundary information, rather the boundary information may be extracted from a database. Thus, the boundary information may be predefined or precalculated, in order to improve a speed and*/*or efficiency of generating the recommended route.*

In some examples, obtaining the boundary information may comprise generating the boundary information by processing satellite imagery of the predetermined region. *This may allow boundary information to still be obtained even in situations where it is not retrievable from a database.*

In some examples, controlling the output user interface may comprise: providing a visual representation of the predetermined region; and overlaying a visual representation of the recommended route, over the visual representation of the predetermined region, in the form of one or more lines representing the recommended route. *This provides an intuitive visual representation of the recommended route for increasing a likelihood of an individual adhering to the recommended route.*

There is also provided a method for moving an agricultural vehicle within a predetermined region bound by a boundary, the method comprising: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the region, controlling the travel direction of the agricultural vehicle to follow the recommended route for the agricultural vehicle.

In some examples, the act of controlling the direction of the agricultural vehicle may be performed automatically. *This may facilitate the agricultural vehicle following the new recommended route without the need for any manual intervention.* Alternatively, the act of controlling the direction of the agricultural vehicle may be performed by an operator or user of the agricultural vehicle, i.e., controlled manually.

The method may further comprise restricting or preventing the performance of an agricultural process by the agricultural vehicle until after the recommended route is available. *This may thus ensure that the agricultural vehicle follows the new recommended route and does not begin following a sub-optimal route.*

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the predetermined region: monitor, using a position monitoring device, the position of the agricultural vehicle with respect to the recommended route; and responsive to a deviation of the monitored position of the agricultural vehicle from the recommended route, updating, by the guidance control system, the recommended route. The position monitoring device may be part of the guidance control system or it may be separate but (wirelessly/wiredly) connected to the guidance control system (and thus the instructions would cause the position monitoring device to monitor the position of the agricultural vehicle).

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the region, control the travel direction of the agricultural vehicle to follow the recommended route for the agricultural vehicle.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIGS. 2A-2F illustrate an example of a proposed method;
FIG. 3 is a flowchart illustrating another proposed method;
FIG. 4 is a flowchart illustrating another proposed method; and
FIG. 5 illustrates a system comprising a guidance control system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the present disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to dividing up the predetermined region based on analysis of exterior angles between consecutive boundary segments.

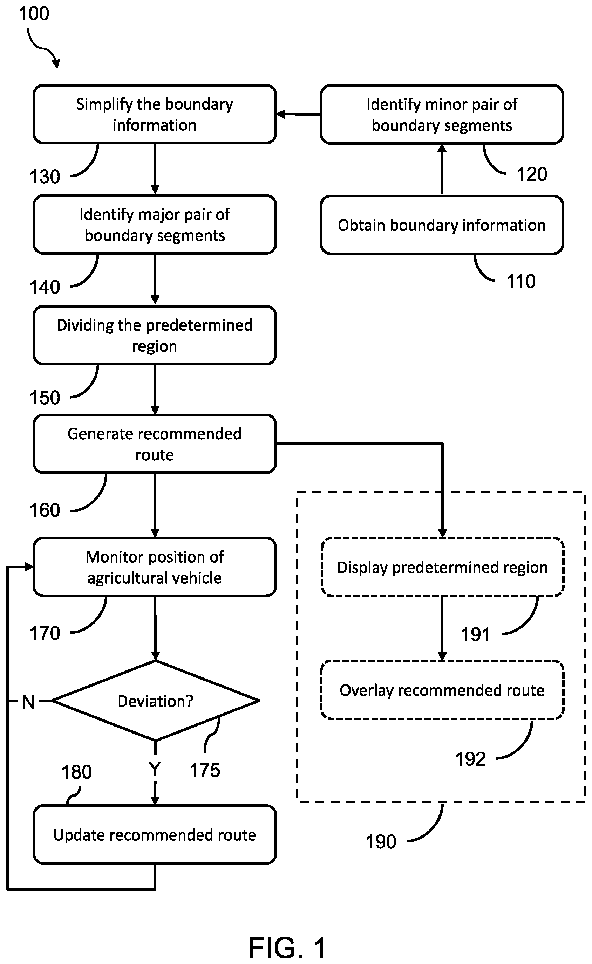

FIG. 1 is a flowchart illustrating a proposed computer-implemented method 100 that is executed, e.g., by a processing system, to perform the proposed approach. In particular, the method 100 is designed for generating a recommended route for an agricultural vehicle to perform an agricultural process within a predetermined region bound by a boundary.

The computer-implemented method 100 comprises a act 110 of obtaining, by a guidance control system, boundary information. The boundary information defines the predetermined region using a series (e.g., set) of connected linear boundary segments. In other words, the boundary information comprises information indicating the boundary of the predetermined region using a closed set of linear (i.e., straight line) boundary segments which are connected end to end.

The boundary information can, for instance, be retrieved from a memory or database. More particularly, in some embodiments, the act of obtaining the boundary information can comprise retrieving the boundary information from a database storing a plurality of instances of boundary information for different predetermined regions. In this approach, the boundary information corresponding to the predetermined region is selected. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

Alternatively, the boundary information can be generated by the guidance control system by processing satellite imagery of the predetermined region. This can thus allow boundary information to still be obtained even in situations where it is not retrievable from a database.

The computer-implemented method 100 also comprises a act 120 of identifying, by the guidance control system, at least one minor pair of consecutive linear boundary segments in the boundary information, wherein a minor pair comprises a pair of consecutive linear boundary segments with an exterior angle between the segments of 175 to 185 degrees. To be clear, an exterior angle comprises the angle between two connected consecutive linear boundary segments on the outside of the predetermined region. In other embodiments, the definition of a minor pair may be adjusted slightly, for example, it may comprise a pair of consecutive linear boundary segments with an exterior angle between the segments of 170 to 180 degrees.

The computer-implemented method 100 also comprises a act 130 of simplifying, by the guidance control system, the boundary information to generate simplified boundary information by merging the at least one identified minor pair of consecutive linear boundary segments into a single linear boundary segment. For example, each minor pair of consecutive linear boundary segments can essentially be deleted, and a new single linear boundary segment introduced in the gap left behind (closing the set of boundary segments again). Another approach could be to adjust the direction of each segment of the minor pair to an average direction between the two, such that the directions of the said segments match, essentially merging them into one. The skilled person would understand that there are many ways the two boundary segments of a minor pair could be merged, such that a single linear boundary segment essentially replaces the minor pair. Act 130 thus produces simplified boundary information defining the predetermined region using a second series of connected linear boundary segments, wherein the second series of connected linear boundary segments comprises fewer linear boundary segments than the initial series of connected linear boundary segments.

For example, simplifying the boundary information could be performed using a Ramer-Douglas-Peucker algorithm to remove small concave exterior angles (i.e., reflex interior angles).

The computer-implemented method 100 also comprises act 140 of identifying, by the guidance control system, at least one major pair of consecutive linear boundary segments in the simplified boundary information (i.e., in the second series of consecutive linear boundary segments), wherein a major pair comprises a pair of consecutive linear boundary segments with an exterior angle between the segments of 0 to 175 degrees. In other embodiments, the definition of a major pair may be adjusted slightly, for example, it may comprise a pair of consecutive linear boundary segments with an exterior angle between the segments of 0 to 170 degrees.

In other words, if the field is concave, i.e., comprising one or more major pairs, such that the boundary of the field forms a concave shape, then the major pairs are identified. In geometric terms, a field is concave if there exist two points on the boundary of the field such that a straight line drawn between them lies outside the field at some point. This implies that the field boundary curves inward at least in one segment.

The computer-implemented method 100 also comprises act 150 of dividing, by the guidance control system, the predetermined region into at least two sub-regions based on the identified at least one major pair of consecutive linear boundary segments. It should be noted that the two or more sub-regions, when combined, are equivalent to the predetermined region. In other words, the predetermined region consists of the at least two sub-regions. As would be apparent to the skilled person, there are many ways in which predetermined region could be divided (i.e., split, demarcated) into two or more sub-regions based on the identified one or more major pairs. For example, this could be done by drawing a bisecting line from the intersection point of the major pair and extending this bisecting line until it reaches another boundary segment of predetermined region. This bisecting line (and potentially others) could then be used to divide the predetermined region into at least two sub-regions. Another example could be projecting a line perpendicular to one of the segments of the major pair from the intersection point of the major pair and extending this line until it intersects another boundary segment. This perpendicular line (and potentially others) could then be used to divide the predetermined region into at least two sub-regions.

The computer-implemented method 100 also comprises a act 160 of generating (by the guidance control system) a recommended route for movement of the agricultural vehicle within the predetermined region by processing at least the boundary information and the at least two sub-regions. For example, recommended routes may be generated separately and independently for each of the sub-regions and then merely connected. The skilled person would be aware of the myriad of ways in which this could be done.

The recommended route may be defined with respect to a predetermined spatial co-ordinate system, such as a global or geographic co-ordinate system (e.g., longitude and latitude), a region/local co-ordinate system (e.g., a trilatered/triangulated position) or a relative co-ordinate system, such as one defined with respect to the boundary of the predetermined region.

In general, act 160 may comprise generating a recommended route with a target or aim of performing an agricultural process across the largest possible area of the predetermined region.

For instance, one or more machine-learning algorithms may be appropriately configured and/or trained for generating a recommended route for movement of the agricultural vehicle within the predetermined region by processing at least the boundary information and the at least two sub-regions. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

The computer-implemented method 100 also comprises performing further acts 170 and 180, which are only performed during a subsequent (to act 160) performance of the agricultural process.

Act 170 comprises monitoring, using a position monitoring device, the position of the agricultural vehicle with respect to the recommended route. Act 170 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such as technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 180 comprises, responsive to a deviation of the monitored position of the agricultural vehicle from the recommended route, updating, by the guidance control system, the recommended route.

Thus, act 180 may comprise a sub-act 175 of determining whether or not that there is a deviation from the monitored position of the agricultural vehicle from the recommended route. Sub-act 175 may be performed by the guidance control system and/or the position monitoring system.

One approach to performing act 175 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 175 may determine that there is a deviation from the recommended route. Responsive to the determined distance failing to breach/exceed a predetermined threshold (e.g., representing a spatial distance of no less than 1 m), then act 175 may determine that there is no deviation from the recommended route.

Responsive to a positive determination in sub-act 175 (i.e., when a deviation is detected), the method 100 moves to the act 180 of updating the recommended route. Act 180 may be performed, for instance, by effectively repeating the procedure performed in act 160 - but with a modified version of the boundary of the predetermined region. In particular, the boundary may be moved such that the predetermined region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 100 further comprises a act 190 of controlling an output user interface to provide a visual representation of the recommended route. Approaches for controlling an output user interface (e.g., a display or screen) to provide a visual representation of a data element will be readily apparent to the skilled person.

As a working example, act 190 may comprise a sub-act 191 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 190 may further comprise a sub-act 192 of overlaying a visual representation of the recommended route, over the visual representation of the predetermined region. The visual representation of the recommended route may take the form of one or more lines representing the recommended route.

Sub-act 192 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 1, the method 100 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route. In some embodiments, the travel speed of the agricultural vehicle can also be controlled during performance of the agricultural process. For instance, the travel speed of the agricultural vehicle can be controlled to slow down when approaching a detected dangerous area (e.g., as described above, if the classification of an obstacle represents an increased risk of damage to the vehicle or the obstacle itself). In some embodiments, the act of controlling the direction (and potentially also travel speed) of the agricultural vehicle can be performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 100 may thus comprise controlling an output user interface to provide a visual representation of the recommended route (example approaches for which have been previously described) and controlling, by the human operator, the travel direction of the agricultural vehicle responsive to the recommended route.

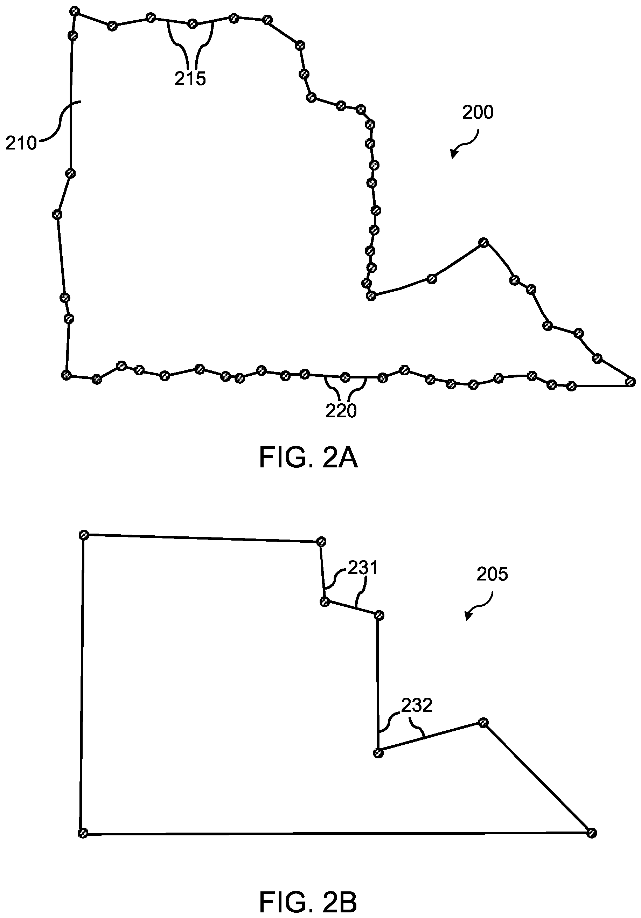

FIG. 2A illustrates the start of an example of a proposed method according to the present disclosure. Specifically, FIG. 2A illustrates an example of boundary information 200 such as that obtained in act 110 of method 100. For example, the boundary information 200 comprises a series of connected linear boundary segments 215. The connections between the linear (e.g., straight) segments are illustrated by the dots. Together, the linear boundary segments thus define a predetermined region 210.

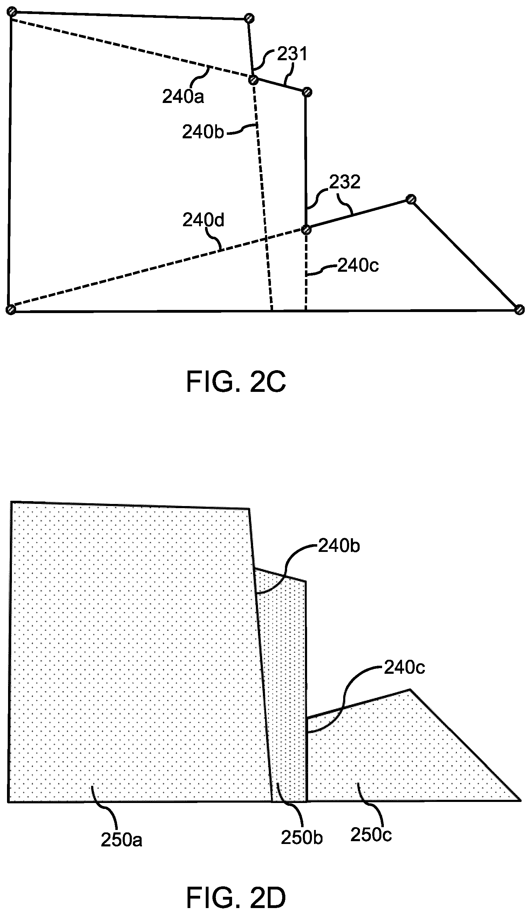

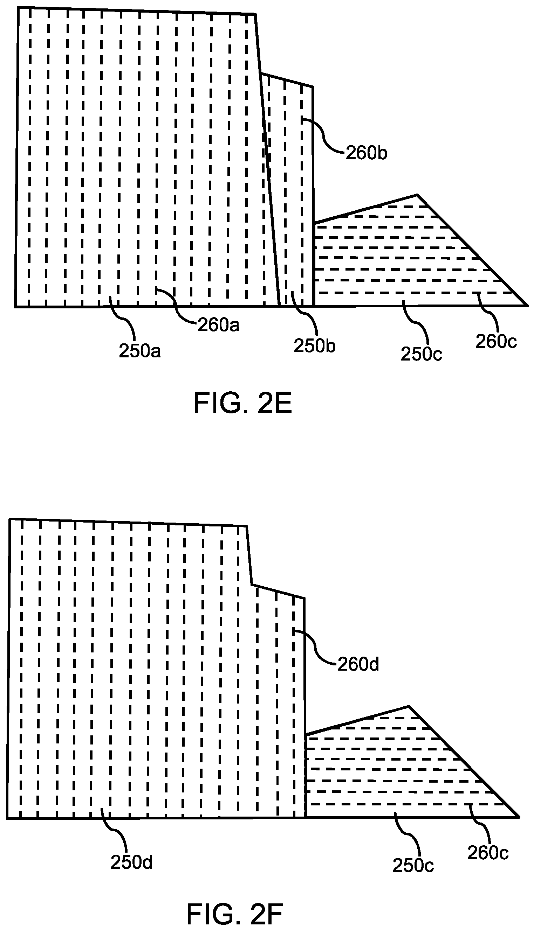

Using this boundary information 200, minor pairs of consecutive linear boundary segments can be identified (wherein a minor pair comprises a pair of consecutive linear boundary segments with an exterior angle between the segments of 175 to 185 degrees. One example of a minor pair is shown by pair 220. It should be noted that the angles shown in FIG. 2 between segments are not exact, but rather the illustration is provided merely to help visually guide an explanation of an embodiment according to the proposed disclosure.

In FIG. 2B, the boundary information 200 has been simplified (into simplified boundary information 205) by merging the identified minor pairs of consecutive linear boundary segments (as exemplified by pair 220) into single linear boundary segments respectively. Using this simplified boundary information 205, major pairs of consecutive linear boundary segments can be identified (wherein a major pair comprises a pair of consecutive linear boundary segments with an exterior angle between the segments of 0 to 175 degrees. The two major pairs present in the simplified boundary information 205 are shown by pairs 231 and 232.

In FIG. 2C, two candidate splitting lines, 240a and 240b, and 240c and 240d, have been generated for each major pair, 231 and 232. As can be seen, the candidate splitting lines are continuations of each of the boundary segments of the major pair respectively across the predetermined region 210.

In FIG. 2D, one candidate splitting line per major pair, 231 and 232, has been used as a portion of the boundary of at least one of the sub-regions, 250a-250c, which the predetermined region 210 has been divided into (using the candidate splitting lines). For example, as can be seen, splitting line 240b has been used from the first major pair 231 and forms part of the boundaries of both the first sub-region 250a and the second sub-region 250b, and splitting line 240c has been used from the second major pair 232 and forms part of the boundaries of both the second sub-region 250b and the third sub-region 250c.

In FIG. 2E, waylines, 260a-260c, have been generated for each of the sub-regions, 250a-250c, respectively. In FIG. 2F, as the waylines 260a and 260b for adjacent sub-regions 250a and 250b have waylines which are essentially in the same direction (e.g., within 5 degrees of each other), the sub-regions 250a and 250b have been merged, thus forming a new sub-region 250d which has waylines 260d. The direction of the waylines 260d could be, for example, an average between the directions of the two original sets of waylines, 250a and 250b, or they could have the direction of either one of the original sets of waylines, 250a and 250b.

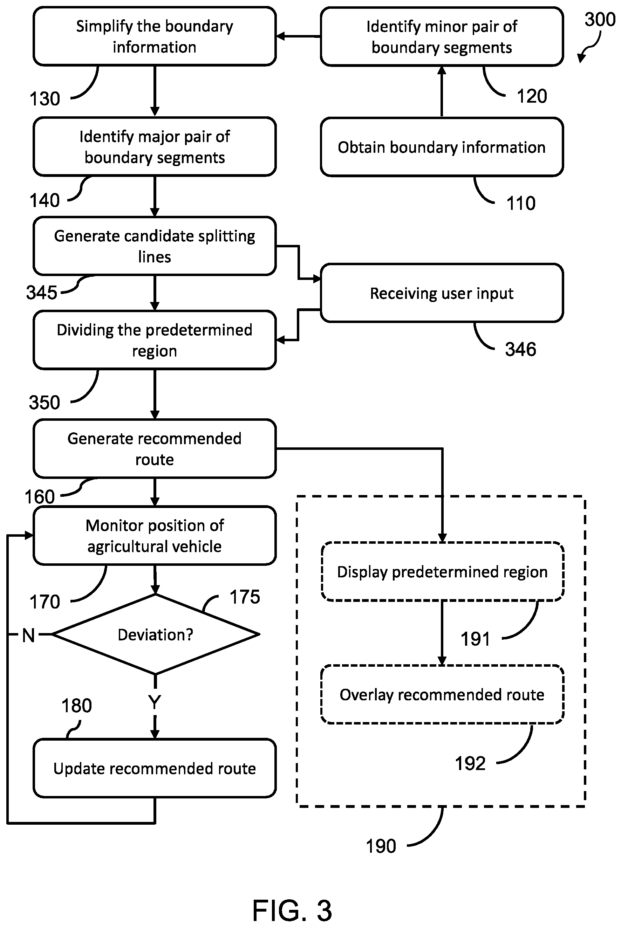

FIG. 3 is a flowchart illustrating a proposed computer-implemented method 300 that is executed, e.g., by a processing system, to perform the proposed approach. Acts 110, 120, 130, 140, 160, 170, 175, 180, 190, 191, 192 are substantially the same as have been described in relation to method 100 of Fig. 1.

The computer-implemented method 300 comprises act 345 of, for each major pair, generating two candidate splitting lines, wherein each candidate splitting line is a continuation of each of the boundary segments of the major pair respectively across the predetermined region.

Act 350 thus comprises dividing the predetermined region into at least two sub-regions based on at least one of the candidate splitting lines per major pair. This provides a particularly effective methodology for generating splitting lines which can then be used to divide the predetermined region into sub-regions which are easier to generate recommended routes for. Specifically in this embodiment, dividing the predetermined region into at least two sub-regions is based on at least one of the candidate splitting lines per major pair may comprise: using at least one of the candidate splitting lines per major pair as at least a portion of the boundary of at least one of the sub-regions. This facilitates a particularly efficient way to determine sub-regions using the splitting lines, however, as the skilled person would appreciate, in other embodiments, this need not be the case and, for example, both candidate splitting lines could be used.

Specifically in this embodiment, however, the method 300 additionally comprises act 346 of receiving, by the guidance control system, a user input indicting which candidate splitting lines to use for dividing the predetermined region; and wherein dividing the predetermined region (in act 350) is further based on the received user input. This allows a user to have some input as to how the predetermined region is divided into sub-regions, but of course, is optional. Furthermore, in this embodiment, the candidate splitting lines are user-adjustable. In this way, a user is able to actually adjust the candidate splitting lines and thus influence how the predetermined region will be divided, but of course, as the skilled person would appreciate, in other embodiments, the candidate splitting lines may be fixed, i.e., not user-adjustable.

In some embodiments, the user can indicate which candidate splitting lines to use for each major pair simultaneously (i.e., the user can select which splitting line of every pair to use, and after all the selections, the predetermined region can be divided accordingly), however, in other embodiments, it can be performed sequentially (i.e., the user can select which splitting line of a first major pair to use and the predetermined region can be divided accordingly, and then the user can be provided with the next pair of splitting lines, and so on).

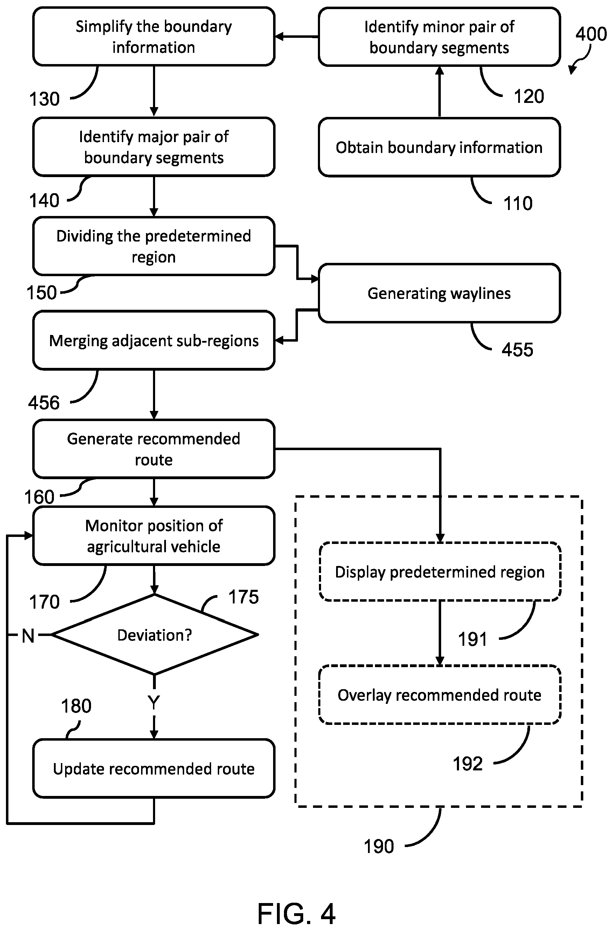

FIG. 4 is a flowchart illustrating a proposed computer-implemented method 400 that is executed, e.g., by a processing system, to perform the proposed approach. Acts 110, 120, 130, 140, 150, 160, 170, 175, 180, 190, 191, 192 are substantially the same as have been described in relation to method 100 of Fig. 1.

The computer-implemented method 400 comprises a act 455 of generating, by the guidance control system, waylines for each of the at least two sub-regions. For example, in some embodiments, the waylines can be generated with an optimal direction based on a user-specified metric performance, e.g., number of turns, overlap area, etc.

Generating the recommended route in act 160 can thus be further based on the generated waylines, however, in this method 400, there is an additional act of 456 of merging, by the guidance control system, adjacent sub-regions if their corresponding waylines have directions within a predetermined angle of one another (e.g., 10 or 5 degrees). This thus simplifies the process of generating the recommended route.

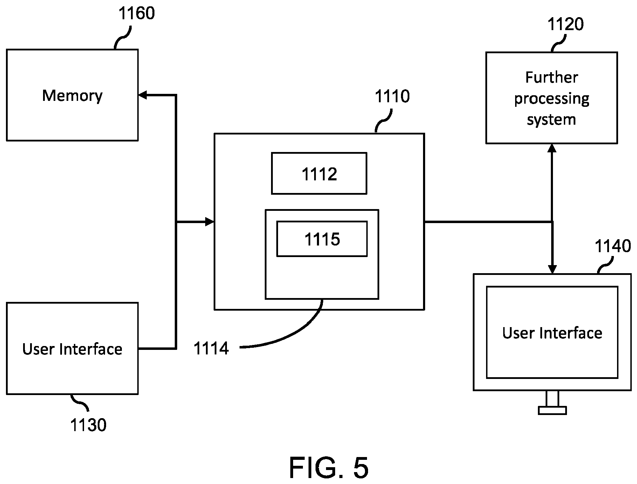

FIG. 5 illustrates an example of system 1100 in which embodiments may be employed.

The guidance control system comprises a guidance control system 1110, which is itself an embodiment of the present disclosure, a position monitoring device 1120, an (optional) input user interface 1130, and a (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 1110 may perform acts of: obtaining, by a guidance control system, boundary information defining the predetermined region using a series of connected linear boundary segments; identifying, by the guidance control system, at least one minor pair of consecutive linear boundary segments in the boundary information, wherein a minor pair comprises a pair of consecutive linear boundary segments with an exterior angle between the segments of 175 to 185 degrees; simplifying, by the guidance control system, the boundary information to generate simplified boundary information by merging the at least one identified minor pair of consecutive linear boundary segments into a single linear boundary segment; identifying, by the guidance control system, at least one major pair of consecutive linear boundary segments in the simplified boundary information, wherein a major pair comprises a pair of consecutive linear boundary segments with an exterior angle between the segments of 0 to 175 degrees; dividing, by the guidance control system, the predetermined region into at least two sub-regions based on the identified at least one major pair of consecutive linear boundary segments; generating, by the guidance control system, a recommended route for movement of the agricultural vehicle within the predetermined region by processing at least the boundary information and the at least two sub-regions; and during a subsequent performance of the agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system, and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the present disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed present disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle to perform an agricultural process within a predetermined region bound by a boundary, the computer-implemented method comprising:
obtaining, by a guidance control system, boundary information defining the predetermined region using a series of connected linear boundary segments;
identifying, by the guidance control system, at least one minor pair of consecutive linear boundary segments in the boundary information, wherein a minor pair comprises a pair of consecutive linear boundary segments with an exterior angle between the segments of 175 to 185 degrees;
simplifying, by the guidance control system, the boundary information to generate simplified boundary information by merging the at least one identified minor pair of consecutive linear boundary segments into a single linear boundary segment;
identifying, by the guidance control system, at least one major pair of consecutive linear boundary segments in the simplified boundary information, wherein a major pair comprises a pair of consecutive linear boundary segments with an exterior angle between the segments of 0 to 175 degrees;
dividing, by the guidance control system, the predetermined region into at least two sub-regions based on the identified at least one major pair of consecutive linear boundary segments;
generating, by the guidance control system, a recommended route for movement of the agricultural vehicle within the predetermined region by processing at least the boundary information and the at least two sub-regions; and
during a subsequent performance of the agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein dividing the predetermined region comprises:
for each major pair, generating two candidate splitting lines, wherein each candidate splitting line is a continuation of each of the boundary segments of the major pair respectively across the predetermined region; and
dividing the predetermined region into at least two sub-regions based on at least one of the candidate splitting lines per major pair.

3. The computer-implemented method of claim 2, wherein dividing the predetermined region into at least two sub-regions based on at least one of the candidate splitting lines per major pair comprises:
using at least one of the candidate splitting lines per major pair as at least a portion of the boundary of at least one of the sub-regions.

4. The computer-implemented method of claim 2 or 3, wherein the method further comprises receiving, by the guidance control system, a user input indicating which candidate splitting lines to use for dividing the predetermined region; and wherein dividing the predetermined region is further based on the received user input.

5. The computer-implemented method of any of claims 2 to 4, wherein the candidate splitting lines are user-adjustable.

6. The computer-implemented method of any of claims 1 to 5, wherein the method further comprises:
generating, by the guidance control system, waylines for each of the at least two sub-regions; and wherein generating the recommended route is further based on the generated waylines.

7. The computer-implemented method of claim 6, wherein the method further comprises:
merging, by the guidance control system, adjacent sub-regions if their corresponding waylines have directions within a predetermined angle of one another.

8. The computer-implemented method of any one of claims 1 to 7, further comprising controlling an output user interface to provide a visual representation of the recommended route.

9. The computer-implemented method of claim 8, wherein controlling the output user interface comprises:
providing a visual representation of the predetermined region; and
overlaying a visual representation of the recommended route, over the visual representation of the predetermined region, in the form of one or more lines representing the recommended route.

10. The computer-implemented method of any one of claims 1 to 9, wherein:
the position monitoring device is configured to define a position of the agricultural vehicle within a predefined co-ordinate system; and
the recommended route defines a recommended path for the agricultural vehicle within the predefined co-ordinate system.

11. The computer-implemented method of claim 10, wherein the recommended route comprises one or more location markers each identifying a point of the recommended route with respect to the predetermined co-ordinate system.

12. The computer-implemented method of any one of claims 1 to 11, wherein the act of obtaining the boundary information comprises retrieving the boundary information from a database storing a plurality of instances of boundary information for different predetermined regions.

13. The computer-implemented method of any one of claims 1 to 12, wherein the act of obtaining the boundary information comprises generating the boundary information by processing satellite imagery of the predetermined region.

14. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain, by a guidance control system, boundary information defining the predetermined region using a series of connected linear boundary segments;
identify, by the guidance control system, at least one minor pair of consecutive linear boundary segments in the boundary information, wherein a minor pair comprises a pair of consecutive linear boundary segments with an exterior angle between the segments of 175 to 185 degrees;
simplify, by the guidance control system, the boundary information to generate simplified boundary information by merging the at least one identified minor pair of consecutive linear boundary segments into a single linear boundary segment;
identify, by the guidance control system, at least one major pair of consecutive linear boundary segments in the simplified boundary information, wherein a major pair comprises a pair of consecutive linear boundary segments with an exterior angle between the segments of 0 to 175 degrees;
divide, by the guidance control system, the predetermined region into at least two sub-regions based on the identified at least one major pair of consecutive linear boundary segments;
generate, by the guidance control system, a recommended route for movement of the agricultural vehicle within the predetermined region by processing at least the boundary information and the at least two sub-regions; and
during a subsequent performance of the agricultural process by the agricultural vehicle within the region:
monitor, using a position monitoring device, the position of the agricultural vehicle with respect to the recommended route; and
responsive to a deviation of the monitored position of the agricultural vehicle from the recommended route, update, by the guidance control system, the recommended route.

15. The agricultural vehicle of claim 17, further comprising:
an output user interface; and
wherein at least one non-transitory computer-readable storage medium of the guidance control system further comprises instructions that, when executed by the at least one processor, cause the guidance control system guidance control system to provide, on the output user interface, a visual representation of the recommended route.
